(19) Europäisches Patentamt
European Patent Office
Office européen des brevets

(11) Numéro de publication : **0 096 638**
**B1**

(12) **FASCICULE DE BREVET EUROPÉEN**

(45) Date de publication du fascicule du brevet : **30.12.86**

(51) Int. Cl.[4] : **C 08 L 95/00**, C 10 C 3/02, E 01 C 7/26

(21) Numéro de dépôt : **83401132.2**

(22) Date de dépôt : **03.06.83**

(54) **Procédé de préparation de compositions bitume-polymère, application de ces compositions à la réalisation de revêtements et solution mère de polymère utilisable pour lesdites compositions.**

(30) Priorité : **10.06.82 FR 8210095**

(43) Date de publication de la demande : **21.12.83 Bulletin 83/51**

(45) Mention de la délivrance du brevet : **30.12.86 Bulletin 86/52**

(84) Etats contractants désignés : **AT DE GB NL SE**

(56) Documents cités :
**CH-A- 461 793**
**FR-A- 2 017 127**
**FR-A- 2 376 188**
**FR-A- 2 429 241**

(73) Titulaire : **ELF FRANCE Société Anonyme dite: 137, Rue de l'Université F-75340 Paris Cedex 07 (FR)**

(72) Inventeur : **Hagenbach, Germain "Cornevent" F-69390 Vernaison (FR)**
Inventeur : **Maldonado Paul 23 Avenue du 8 Mai 1945 F-69360 Saint-Symphorien d'Ozon (FR)**
Inventeur : **Maurice, Jacques 103 Avenue Trespoey F-64000 Pau (FR)**

(74) Mandataire : **Boillot, Marc SOCIETE NATIONALE ELF AQUITAINE Division Propriété Industrielle Tour Elf F-92078 Paris la Défense Cédex 45 (FR)**

**EP 0 096 638 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention a pour objet un procédé de préparation de compositions bitume-polymère. Elle concerne également l'application des compositions obtenues par ce procédé à la réalisation de revêtements, et en particulier de revêtements superficiels routiers, et se rapporte encore à une solution mère de polymère utilisable pour l'obtention desdites compositions.

Il est connu d'utiliser des compositions bitumineuses comme revêtements de surfaces diverses et en particulier comme enduits superficiels routiers.

On sait également que l'on peut ajouter des polymères variés aux bitumes pour former des compositions du type bitume-polymère, qui présentent des propriétés mécaniques améliorées par rapport aux compositions bitumineuses exemptes de polymère.

Il est enfin connu d'augmenter la stabilité des compositions bitume-polymère, et ainsi d'élargir leur domaine d'utilisation, en effectuant un couplage chimique entre le polymère et le bitume.

Ceci peut être réalisé, par exemple, comme décrit dans FR-A-2376188 en effectuant, à une température comprise entre 130 °C et 230 °C, un mélange du bitume avec, comptés en poids du bitume, 2 à 25 % d'un copolymère statistique ou séquencé de styrène et d'un diène conjugué et 0,1 à 3 % de soufre chimiquement non lié, et en maintenant le mélange résultant à la température précitée et sous agitation pendant au moins vingt minutes.

Dans un tel procédé, qui fait intervenir une solubilisation directe du polymère dans le bitume, une homogénéité convenable n'est obtenue qu'après une durée d'agitation du mélange de bitume, polymère et soufre aux températures élevées, comprises entre 130° et 230 °C et situées le plus souvent aux environs de 150 °C à 200 °C, qui va croissant notamment avec la quantité de polymère à incorporer au bitume et prend, dans la plupart des cas, des valeurs de l'ordre de deux à quatre heures.

Cette durée relativement longue d'homogénéisation et la consommation substantielle d'énergie calorifique qui en résulte, ont un impact défavorable sur le prix de revient de l'opération. En outre les compositions obtenues par ce procédé, bien qu'ayant acquis des propriétés mécaniques intéressantes, possèdent des viscosités élevées, qui les rendent difficilement répandables en utilisant les rampes classiques équipant le matériel de répandage.

Pour faciliter la préparation des compositions bitume-polymère, pour lesquelles un copolymère statistique ou séquencé de styrène et d'un diène conjugué est couplé au bitume en faisant appel à du soufre chimiquement non lié comme agent de couplage, et rendre lesdites compositions directement utilisables par les moyens classiques de répandage, on a proposé, comme décrit dans FR-A-2429241, d'incorporer simultanément au bitume le copolymère et le soufre sous la forme d'une solution mère de ces deux produits dans un solvant constitué par une huile hydrocarbonée ayant un intervalle de distillation à pression atmosphérique compris entre 150 °C et 250 °C, ladite solution mère étant préparée à une température comprise entre 80 °C et 160 °C et étant ajoutée au bitume à des températures entre environ 130° et 230 °C.

La dissolution du copolymère dans la fraction d'huile hydrocarbonée est plus rapide et facile que la dissolution directe dudit copolymère dans le bitume, et il en résulte un gain de temps et une économie d'énergie pour parvenir à la composition bitume-polymère finale. En outre, on obtient directement une composition fluidifiée satisfaisant les contraintes de viscosité nécessaires à l'obtention de bonnes conditions de répandage.

Dans le procédé de FR-A-2376188 comme dans celui plus perfectionné de FR-A-2429241, l'utilisation de soufre chimiquement non lié, notamment fleur de soufre ou encore soufre cristallisé alpha, comme agent de couplage du copolymère au bitume présente certains inconvénients.

En effet, lors de l'incorporation directe du copolymère et du soufre au bitume, il est difficile de répartir le soufre dans le mélange de manière homogène et par là même de réaliser, de manière régulière, le greffage chimique du copolymère au bitume et le pontage des chaînes du copolymère entre elles. De même lorsque l'on incorpore le copolymère et le soufre au bitume en faisant appel à la technique de la solution mère, il peut se produire, lors de la préparation de la solution mère, des survulcanisations locales du copolymère qui, par la suite, influent défavorablement sur les propriétés de la composition finale bitume-polymère. En outre, dans cette solution mère, le soufre peut recristalliser et sédimenter au cours du temps, notamment après un stockage prolongé à température ambiante, ce qui rend difficile l'obtention d'un produit de qualité constante.

On a maintenant trouvé que l'on pouvait éliminer les inconvénients apportés par l'utilisation de soufre solide dans les techniques de préparation de compositions bitume-polymère du type de celles proposées dans les brevets français précités, en remplaçant ledit soufre par un polysulfure, et notamment par un polysulfure de dihydrocarbyle.

Un tel polysulfure est plus aisément soluble dans le bitume ou dans la fraction d'huile hydrocarbonée constituant le solvant de la solution mère que le soufre solide finement divisé, et en outre la quantité de soufre radicalaire, qui se forme à partir du polysulfure, est plus facile à contrôler que celle produite à partir du soufre solide, ce qui permet de réaliser un meilleur contrôle du greffage du copolymère au bitume et du pontage des chaînes du copolymère entre elles, avec comme résultat l'obtention d'une composition de bitume-polymère présentant une quantité constante dans ses propriétés. Ceci constitue

un avantage important lors des campagnes de réfection des revêtements routiers, au cours desquelles des quantités de composition bitume-polymère de l'ordre de plusieurs milliers de tonnes doivent être préparées en plusieurs fractions.

L'invention concerne donc un procédé de préparation de composition bitume-polymère, dans lequel on réalise, à une température comprise entre 130° et 230 °C, un mélange de bitume avec un copolymère de styrène et d'un diène conjugué, utilisé en quantité allant de 0,5 à 15 % en poids de bitume, et une source de soufre, et l'on maintient le mélange ainsi obtenu, sous agitation, dans ledit intervalle de température, pendant une durée d'au moins quinze minutes, ledit procédé se caractérisant en ce que, comme source de soufre, on emploie 0,005 à 15 % en poids, par rapport au bitume, d'un polysulfure ou d'un mélange de polysulfures répondant à la formule générale :

$$R_1—(S)_m—(—R—(S)_m—)_x—R_2$$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent en $C_1$ à $C_{20}$, saturé ou insaturé, formant un cycle avec les autres groupements d'atomes associés dans la formule, R est un radical hydrocarboné divalent, saturé ou insaturé, en $C_1$ à $C_{20}$, les — $(S)_m$ — représentent des groupes divalents formés chacun de m atomes de soufre, les m pouvant être différents de l'un desdits groupements à l'autre et désignant des nombres entiers allant de 1 à 6 avec au moins l'un des m égal ou supérieur à 2, et x représente un nombre entier prenant les valeurs de zéro à 10.

Dans la formule précitée, les radicaux hydrocarbonés monovalents $R_1$ et $R_2$ en $C_1$ à $C_{20}$ ainsi que le radical hydrocarboné divalent R en $C_1$ à $C_{20}$ sont choisis notamment parmi les radicaux aliphatiques, alicycliques ou aromatiques. Lorsque les radicaux $R_1$ et $R_2$ sont reliés entre eux pour constituer un radical hydrocarboné divalent en $C_1$ à $C_{20}$ formant un cycle avec les autres groupements d'atomes associés dans la formule, ledit radical divalent est similaire au radical R et peut être également du type aliphatique, alicylique, ou aromatique. En particulier les radicaux $R_1$ et $R_2$ sont identiques et choisis parmi les radicaux alcoyles en $C_1$ à $C_{20}$, par exemple éthyle, propyle, hexyle, octyle, nonyle, décyle, dodécyle linéaire, tertio-dodécyle, hexadécyle, octadécyle, et les radicaux cycloalcoyles et aryles en $C_6$ à $C_{20}$, notamment benzyle, phényle, tolyle, cyclohexyle, tandis que le radical R ou le radical divalent formés par la réunion de $R_1$ et $R_2$ sont choisis parmi les radicaux alcoylènes en $C_1$ à $C_{20}$ ou les radicaux cycloalcoylènes ou arylènes, notamment phénylène, tolylène, cyclohexylène, en $C_6$ à $C_{20}$.

Des polysulfures utilisables suivant l'invention sont en particulier ceux définis par la formule.

$$R_1—(S)_n—R_2$$

dans laquelle $R_1$ et $R_2$ désignent chacun un radical hydrocarboné monovalent, saturé ou insaturé, en $C_1$ à $C_{20}$ ou sont reliés entre eux pour former un radical divalent R en $C_1$ à $C_{20}$, $R_1$, $R_2$ et R ayant les significations précédentes, $—(S)_n—$ représente un groupement divalent formé par un enchaînement de n atomes de soufre, n étant un nombre entier allant de 2 à 6.

Des polysulfures préférés répondent à la formule générale $R_3—(S)_p—R_3$, dans laquelle $R_3$ désigne un radical alcoyle en $C_6$ à $C_{16}$, et $—(S)_p—$ représente un groupement divalent formé par un enchaînement de p atomes de soufre, p étant un nombre entier allant de 2 à 5. Des exemples de tels polysulfures sont notamment disulfure de dihexyle, disulfure de diocyle, disulfure de didodécyle, disulfure de ditertiododécyle, disulfure de dihexadécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, tétrasulfure de dihexadécyle, pentasulfure de dihexyle, pentasulfure de dioctyle, pentasulfure de dinonyle, pentasulfure de ditertiododécyle, pentasulfure de dihexadécyle.

D'autres polysulfures, qui peuvent être utilisés suivant l'invention, sont par exemple tels que trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

La quantité de polysulfure, qui peut aller de 0,005 % à 15 % du poids du bitume, représente de préférence 0,1 % à 5 % de ce poids.

Le bitume, qui constitue la partie majoritaire des compositions bitume-polymère suivant l'invention, est choisi parmi les divers bitumes ayant une pénétration, définie suivant la norme NFT 66004, comprise entre 5 et 500 et de préférence entre 20 et 400. De tels bitumes peuvent être, en particulier, des bitumes de distillation directe, ou encore des bitumes soufflés ou semi-soufflés, ayant une pénétration comprise dans les intervalles précités.

Le copolymère de styrène et d'un diène conjugué, utilisé dans la préparation de la composition bitume-polymère, est choisi avantageusement parmi les copolymères statistiques ou séquencés de styrène et de butadiène, de styrène et d'isoprène, de styrène et de chloroprène, de styrène et de butadiène carboxylé, et de styrène et d'isoprène carboxylé. Le copolymère de styrène et de diène conjugué, et en particulier chacun des copolymères précités, a une teneur pondérale en styrène allant de préférence de 15 % à 40 %. La masse moléculaire viscosimétrique moyenne du copolymère de styrène et de diène conjugué, et en particulier celles des copolymères mentionnés ci-dessus, peut être comprise avantageusement entre 30 000 et 300 000 et se situe de préférence entre 70 000 et 200 000.

Le copolymère de styrène et de diène conjugué est choisi de préférence parmi les copolymères di- ou triséquencés de styrène et de butadiène, de styrène et d'isoprène, de styrène et de butadiène carboxylé, de styrène et d'isoprène carboxylé ayant des teneurs en styrène et des masses moléculaires situées dans les intervalles définis précédemment.

La quantité préférée de copolymère ajoutée au bitume est comprise entre 0,7 % et 10 % en poids du bitume.

Dans une forme préférée de mise en œuvre du procédé suivant l'invention, le copolymère et le polysulfure sont incorporés au bitume sous la forme d'une solution mère de ces deux produits dans un solvant consistant en une huile hydrocarbonée, qui présente un intervalle de distillation à pression atmosphérique, déterminés selon la norme ASTM D 86-67, compris entre 100 °C et 450 °C et situé plus particulièrement entre 150 °C et 370 °C.

Cette huile hydrocarbonée, qui peut être notamment une coupe pétrolière de caractère aromatique, une coupe pétrolière de caractère naphténo-paraffinique, une coupe pétrolière de caractère naphténo-aromatique, une huile de houille ou encore une huile d'origine végétale, est suffisamment « lourde » pour limiter l'évaporation au moment de l'addition de la solution mère au bitume et en même temps suffisamment « légère » pour être éliminée au maximum après répandage de la composition bitume-polymère la contenant de manière à retrouver les mêmes propriétés mécaniques qu'aurait présentées, après répandage à chaud, la composition bitume-polymère préparée sans faire appel à la technique de la solution mère.

La solution mère est préparée par mise en contact des ingrédients la composant, à savoir huile hydrocarbonée servant de solvant, copolymère, et polysulfure, sous agitation, à des températures comprises entre 20 et 170 °C et plus particulièrement entre 40 et 120 °C, pendant un temps suffisant, par exemple d'environ 30 minutes à environ 90 minutes, pour obtenir une dissolution complète du copolymère et du polysulfure dans l'huile hydrocarbonée.

Les concentrations respectives du copolymère et du polysulfure dans la solution mère peuvent varier assez largement en fonction notamment de la nature de l'huile hydrocarbonée utilisée pour dissoudre le copolymère et le polysulfure. Ainsi les quantités respectives de copolymère et de polysulfure peuvent représenter avantageusement 5 % à 40 % et 0,1 à 15 % du poids de l'huile hydrocarbonée. Une solution mère préférée renferme, comptés en poids de l'huile hydrocarbonée employée comme solvant, 10 à 35 % de copolymère et 0,5 à 5 % de polysulfure.

Lorsque les compositions suivant l'invention sont formées directement à partir des ingrédients bitume, copolymère, et polysulfure, on opère de préférence en mettant tout d'abord en contact le copolymère avec le bitume, dans les proportions choisies, à une température comprise entre 130 °C et 230 °C et sous agitation, pendant une durée suffisante, généralement de l'ordre de quelques dizaines de minutes à quelques heures, pour former un mélange homogène, puis on ajoute le polysulfure au mélange obtenu et maintient le tout sous agitation à une température comprise entre 130 °C et 230 °C, par exemple correspondant à la température de mise en contact du copolymère avec le bitume, pendant une durée au moins égale à 15 minutes, et généralement allant de 15 à 90 minutes, pour permettre au polysulfure de libérer du soufre radicalaire et au soufre radicalaire ainsi produit d'initier d'une part le greffage du copolymère au bitume et d'autre part le pontage des chaînes dudit copolymère entre elles.

Les quantités de copolymère mises en contact avec le bitume et de polysulfure ajoutées ensuite au mélange homogène de bitume et dudit copolymère sont choisies pour être comprises dans les intervalles définis précédemment pour ces quantités.

Pour préparer les compositions bitume-polymère suivant l'invention en faisant appel à la technique de la solution mère, on mélange la solution mère du copolymère et du polysulfure avec le bitume, en opérant à une température comprise entre 130 °C et 230 °C et sous agitation, ceci étant effectué par exemple en ajoutant la solution mère au bitume maintenu sous agitation à la température entre 130 °C et 230 °C, puis on maintient le mélange résultant sous agitation à une température comprise entre 130 °C et 230 °C, par exemple à la température utilisée pour le mélange de la solution mère au bitume, pendant une durée au moins égale à 15 minutes, et généralement allant de 15 à 90 minutes, et généralement allant de 15 à 90 minutes, pour permettre, par le biais du polysulfure, le greffage du copolymère aux asphaltènes du bitume et le pontage des chaînes dudit copolymère entre elles.

La quantité de solution mère mélangée au bitume est choisie pour fournir les quantités désirées, par rapport au bitume, de copolymère et de polysulfure, lesdites quantités étant dans les fourchettes définies précédemment.

Une forme de mise en œuvre particulièrement préférée pour la préparation de compositions bitume-copolymère suivant l'invention par la technique de la solution mère consiste à mettre en contact, à une température comprise entre 130 °C et 230 °C et sous agitation, de 80 à 95 % en poids du bitume avec 20 à 5 % en poids de la solution mère, cette dernière renfermant, en poids de l'huile hydrocarbonée servant de solvant, 10 à 35 % de copolymère de styrène et de diène conjugué et 0,5 à 5 % de polysulfure, puis à maintenir le mélange ainsi obtenu sous agitation à une température comprise entre 130 °C et 230 °C, et de préférence à la température utilisée pour la mise en contact du bitume avec la solution mère, pendant une durée au moins égale à 15 minutes, et de préférence comprise entre 20 et 60 minutes.

Les compositions de bitume-polymère obtenues par le procédé suivant l'invention sont utilisables

pour la réalisation de revêtements divers, et en particulier de revêtements superficiels routiers. Pour cette application notamment, les compositions bitume-polymère de l'invention préparées par la technique de la solution mère sont tout particulièrement adaptées, car elles sont directement utilisables par les moyens classiques de répandage.

L'invention est illustrée par les exemples suivants donnés à titre non limitatif.

Les caractéristiques rhéologiques et mécaniques des bitumes ou des compositions bitume-polymère auxquelles ont fait référence dans ces exemples sont les suivantes :

pénétration : exprimée en 1/10 de mm et mesurée suivant la norme NFT66004

point de ramollissement : exprimé en °C et déterminé par l'essai Bille et Anneau (essai B & A) défini par la norme NFT66008

point de Fraass : (point de fragilité) exprimé en °C et déterminé suivant la norme IP 80/53

caractéristiques rhéologiques par traction (norme NFT 46002)

contrainte au seuil $\sigma_s$ en bars
allongement au seuil $\varepsilon_s$ en %
contrainte à la rupture $\sigma_r$ en bars
allongement à la rupture $\varepsilon_r$ en %

viscosité cinématique : exprimée en $m^2/s$ et déterminée suivant la norme NFT 60100

Pseudo-viscosité : exprimée en secondes et déterminée suivant la norme NFT 66005

## Exemple 1

Préparation d'une composition bitume-polymère suivant l'invention par incorporation directe du copolymère et du polysulfure au bitume.

En opérant à 170 °C sous agitation, on mélangeait 1 000 parties en poids d'un bitume de distillation directe ayant une pénétration de 82, un point de ramollissement Bille et Anneau de 48 °C, un point de Fraass égal à — 18,5 °C et une viscosité cinématique à 160 °C de $1,7 \times 10^{-4}$ $m^2/s$, avec 31 parties en poids d'un copolymère diséquencé de styrène et de butadiène présentant une masse moléculaire moyenne viscosimétrique égale à environ 75 000 et renfermant 25 % en poids de styrène.

Après 3 heures 20 minutes de mélange sous agitation, on obtenait une masse homogène.

A cette masse maintenue à 170 °C, on ajoutait alors 7,3 parties en poids de pentasulfure de ditertiododécyle et on agitait encore l'ensemble pendant 30 minutes pour former la composition suivant l'invention.

Dans le tableau I on donne les principales caractéristiques de la composition bitume-polymère ainsi obtenue avant et après l'avoir soumise à l'essai de vieillissement dit « Rolling Film Oven Test » défini dans la norme ASTM D 2872, modifié pour porter la durée du traitement à la chaleur à 150 minutes. Les compositions suivant l'invention avant et après l'essai de vieillissement sont désignées respectivement par « Produit Ial » et « Produit Ia2 ».

Le tableau I donne également les caractéristiques correspondantes du bitume de départ avant et après l'essai de vieillissement (respectivement « Produit Ibl » et « Produit Ib2 »).

En se reportant aux valeurs inscrites au tableau I, on peut voir que l'utilisation de pentasulfure de ditertiododécyle, comme source de soufre, conduit à une composition bitume-polymère, dont les caractéristiques élastomériques la différencient très nettement du bitume (comparer les résultats de l'essai de traction). Par ailleurs, la stabilité au vieillissement de la composition bitume-polymère obtenue par substantiellement améliorée par rapport à celle observée par le bitume pur.

(Voir Tableau 1 page 6)

## Exemple 2

Préparation d'une composition bitume-polymère suivant l'invention par la technique de la solution mère.

a) Préparation de la solution mère :

On opérait dans un réacteur en acier inoxydable muni d'un agitateur et d'une double enveloppe susceptible d'être parcourue par un fluide caloporteur.

L'huile hydrocarbonée utilisée comme solvant pour former la solution mère était une coupe pétrolière de caractère naphténo/aromatique présentant les caractéristiques suivantes :

point initial de distillation ASTM égal à 176 °C
point final de distillation ASTM égal à 352 °C

(mesurés suivant la norme ASTM D 86-87)

point éclair (norme Luchaire NF T 60103) de 79 °C

masse volumique (norme ASTM D 1657-64) égale à 0,956

Tableau I

| Caractéristiques / Produit | Pénétration à 25°C (1/10 mm) | Point de ramollissement B & A (°C) | Point de Fraass (°C) | ESSAI DE TRACTION Temp. (°C) | Vit. mm/mn | $\sigma_s$ bars | $\sigma_r$ bars | $\varepsilon_s$ % | $\varepsilon_r$ % |
|---|---|---|---|---|---|---|---|---|---|
| I a 1 | 68 | 56 | - 19,5 | 20 | 500 | 1,4 | 0,6 | 25 | > 900 |
| | | | | - 10 | 10 | 29 | 10,5 | 15 | 350 |
| I a 2 | 49 | 59 | - 17 | 20 | 500 | 1,7 | 0,9 | 15 | > 900 |
| | | | | - 10 | 10 | 32 | 13 | 15 | 300 |
| I b 1 | 82 | 48 | - 18,5 | 20 | 500 | 1,2 | 0 | 15 | > 900 |
| | | | | - 10 | 10 | FRAGILE | | | |
| I b 2 | 51 | 50 | - 15 | 20 | 500 | 1,8 | 0 | 15 | > 900 |
| | | | | - 10 | 10 | FRAGILE | | | |

On introduisait dans le réacteur 233 parties en poids de la coupe pétrolière et chauffait cette coupe pétrolière, tout en l'agitant, jusqu'à une température d'environ 100 °C par circulation d'un fluide chaud dans la double enveloppe du réacteur.

En maintenant cette température et l'agitation, on introduisait alors dans le réacteur 13 parties en poids du pentasulfure utilisé dans l'exemple 1 et 54 parties en poids d'une poudre, antimottée par 2 % en poids de silice, d'un copolymère diséquencé de styrène et de butadiène renfermant en poids 25 % de styrène et possédant une masse moléculaire moyenne viscosimétrique d'environ 75 000.

Après une heure d'agitation à la température d'environ 100 °C, on obtenait une solution homogène et fluide à température ordinaire caractérisée par les valeurs suivantes de viscosité cinématique :

viscosité cinématique mesurée à 50 °C : $12,10 \times 10^{-4}$ m²/s
viscosité cinémétique mesurée à 100 °C : $2,92 \times 10^{-4}$ m²/s

Cette solution constituait la solution mère utilisée pour la préparation de la composition bitume-polymère.

b) Préparation de la composition bitume-polymère :

Dans une cuve équipée d'agitateurs et pourvue de réchauffeurs à vapeur, on pompait, à 170 °C, 1 700 parties d'un bitume de distillation directe présentant les propriétés physiques initiales suivantes :

point de ramollissement (essai B & A) : 48 °C
point de Fraass : — 18,5 °C
pénétration : 82 1/10 mm
viscosité cinématique à 160 °C : $1,70 \times 10^{-4}$ m²/s

Au contenu de la cuve, maintenu à 170 °C sous agitation, on ajoutait ensuite 300 parties de la solution mère préparée comme décrit ci-dessus. Après 30 minutes d'agitation à la température de 170 °C, on obtenait une composition fluide bitume-polymère présentant une viscosité dynamique à 160 °C égale à 0,098 Pa.s, c'est-à-dire une viscosité comparable à celle d'un bitume ayant une pénétration dans l'intervalle 180-220, et pouvant être chargée directement dans une répandeuse moyenne pression classique.

Dans le tableau II on donne les propriétés de la composition bitume-polymère ainsi obtenue avant et après l'avoir soumise à un traitement thermique consistant à porter à 50 °C un film de 1 mm d'épaisseur de la composition bitume-polymère et à maintenir ledit film à cette température pendant 15 jours, cet essai permettant de simuler l'évolution du produit pendant un an sur route. La composition bitume-polymère est désignée par « produit II.a.1 » avant traitement thermique et par « Produit II.a.2 » après traitement thermique.

Le tableau II montre également, à titre de comparaison, avant et après le traitement thermique précité, les caractéristiques correspondantes du bitume de départ fluidifié par 12 % en poids, par rapport au bitume, du solvant utilisé pour constituer la solution mère (« Produit II.b.1 » et « Produit II.b.2 » respectivement), et d'une composition bitume-polymère préparée de matière similaire à celle décrite dans l'exemple 2 mais en omettant le polysulfure (« Produit II.c.1 » et « Produit II.c.2 »).

Dans la désignation du produit, les indices 1 définissent les compositions avant traitement thermique tandis que les indices 2 définissent les compositions après traitement thermique.

(Voir Tableau II page 8)

Comme il ressort de la comparaison des résultats figurant au tableau II, l'utilisation de pentasulfure de ditertiododécyle, comme source de soufre, dans la technique faisant appel à la solution mère conduit à l'obtention d'une composition bitume-polymère fluidifiée présentant des caractéristiques élastomériques. Après vieillissement le produit donne un liant résiduel, dont les propriétés sont voisines de celles de la composition bitume-polymère obtenue dans l'exemple I en incorporant le polymère et le polysulfure au bitume sans faire appel à la solution mère.

Exemples 3 à 8

Préparation de compositions bitume-polymère suivant l'invention par la technique de la solution mère.

On opérait comme décrit dans l'exemple 2 avec toutefois certaines variations qui sont définies ci-après, les autres conditions opératoires étant celles de l'exemple 2.

Dans l'exemple 3, la solution mère était formée à partir de 243 parties en poids de la coupe pétrolière, 53,5 parties en poids du copolymère diséquencé de styrène et de butadiène, et de 3,5 parties en poids de polysulfure.

Dans l'exemple 4, le copolymère consistait en un copolymère diséquencé de styrène et d'isoprène renfermant 22 % en poids de styrène et présentant une masse moléculaire moyenne viscosimétrique d'environ 78 000.

Dans l'exemple 5, la copolymère consistait en un copolymère diséquencé de styrène et de butadiène

Tableau II

| Caractéristiques / Produit | Pénétration à 25°C (1/10 mm) | Point de ramollissement B & A (°C) | Point de Fraass (°C) | Viscosité (Rhéomat) à 160°C (Pa·s) | Pseudo viscosité (s) | ESSAI DE TRACTION Temp. °C | Vit. mm/mn | $\sigma_s$ bars | $\sigma_r$ bars | $\varepsilon_s$ % | $\varepsilon_r$ % |
|---|---|---|---|---|---|---|---|---|---|---|---|
| II.a.1 | | | | 0,118 | 148 | - 10 | 500 | 7,2 | 2,4 | 18 | > 900 |
| II.a.2 | 82 | 52 | - 19 | 0,35 | | 20 | 500 | 0,75 | 0,5 | 20 | > 900 |
| | | | | | | - 10 | 10 | 18 | 7 | 20 | 450 |
| II.b.1 | | | | 0,07 | 60 | - 10 | 500 | FRAGILE | | | |
| II.b.2 | 105 | 47 | - 13 | 0,26 | | 20 | 500 | 0,5 | 0 | 15 | 800 |
| | | | | | | - 10 | 10 | FRAGILE | | | |
| II.c.1 | | | | 0,081 | 84 | - 10 | 500 | 6,3 | 0 | 15 | 300 |
| II.c.2 | 102 | 48 | - 15 | 0,25 | | 20 | 500 | 0,6 | 0 | 15 | 900 |
| | | | | | | - 10 | 10 | FRAGILE | | | |

carboxylé renfermant 25 % en poids de styrène et présentant une masse moléculaire viscosimétrique d'environ 76 000.

Dans l'exemple 6, le polysulfure consistait en pentasulfure de dinonyle de masse moléculaire égale à 414.

Dans l'exemple 7, le polysulfure était le même que celui utilisé dans l'exemple 6 et la solution mère était formée à partir de 240 parties en poids de la coupe pétrolière, de 54 parties en poids du copolymère, et de 6 parties en poids de polysulfure.

Dans l'exemple 8, le polysulfure était le même que celui utilisé dans l'exemple 6 et la solution mère était formée à partir de 243 parties en poids de la coupe pétrolière, de 54 parties en poids de copolymère, et de 3 parties en poids de polysulfure.

On donne dans le tableau III les caractéristiques des compositions bitume-polymère ainsi obtenues, avant et après les avoir soumises au traitement thermique défini dans l'exemple 2.

Les compositions bitume-polymère avant traitement thermique sont désignées par « Produit Y.a.1 », tandis que les compositions bitume-polymère correspondantes après traitement thermique sont désignées par « Produit Y.a.2 », Y représentant le numéro de l'exemple en chiffre romain.

(Voir Tableau III pages 10 et 11)

Tableau III

| Exemple | Produit | Pénétration à 25°C (1/10 mm) | Point de ramollissement B & A (°C) | Point de Fraass (°C) | Viscosité (Rhéomat) à 160°C (Pa.s) | Pseudo viscosité (s) | ESSAI DE TRACTION Temp. °C | Vit. mm/mn | $\sigma_s$ bars | $\sigma_r$ bars | $\varepsilon_s$ % | $\varepsilon_r$ % |
|---|---|---|---|---|---|---|---|---|---|---|---|---|
| 3 | III.a.1 | | | | 0,094 | 120 | - 10 | 500 | 7,3 | 0,33 | 15 | 450 |
| | III.a.2 | 90 | 50 | - 20 | 0,31 | | 20 | 500 | 0,6 | 0,4 | 20 | > 900 |
| | | | | | | | - 10 | 10 | 15 | 5 | 20 | 400 |
| 4 | IV.a.1 | | | | 0,135 | 160 | - 10 | 500 | 8,1 | 2,8 | 15 | > 900 |
| | IV.a.2 | 78 | 54 | - 19 | 0,4 | | 20 | 500 | 0,9 | 0,6 | 15 | 700 |
| | | | | | | | - 10 | 10 | 22 | 8 | 15 | 200 |
| 5 | V.a.1 | | | | 0,125 | 175 | - 10 | 500 | 7,6 | 3,5 | 20 | > 900 |
| | V.a.2 | 75 | 55 | - 21 | 0,41 | | 20 | 500 | 1 | 0,7 | 20 | 900 |
| | | | | | | | - 10 | 10 | 25 | 9,5 | 15 | 550 |
| 6 | VI.a.1 | | | | 0,125 | 138 | - 10 | 500 | 5,9 | 2,45 | 18 | > 900 |
| | VI.a.2 | 80 | 55 | - 21 | 0,46 | | 20 | 500 | 1,2 | 1 | 20 | > 900 |
| | | | | | | | - 10 | 10 | 24 | 10,5 | 20 | 500 |

Tableau III: (Suite)

| Exemple | Produit | Pénétration à 25°C (1/10 mm) | Point de ramollissement B & A (°C) | Point de Fraass (°C) | Viscosité (Rhéomat) à 160°C (Pa.s) | Pseudo viscosité (s) | ESSAI DE TRACTION Temp. °C | Vit. mm/mn | $\sigma_s$ bars | $\sigma_r$ bars | $\varepsilon_s$ % | $\varepsilon_r$ % |
|---|---|---|---|---|---|---|---|---|---|---|---|---|
| 7 | VII.a.1 | | | | 0,105 | 115 | - 10 | 500 | 6,6 | 1,2 | 18 | > 900 |
| | VII.a.2 | 87 | 55 | - 18 | 0,38 | | 20 | 500 | 1 | 0,3 | 25 | > 900 |
| | | | | | | | - 10 | 10 | 20 | 6,3 | 15 | 270 |
| 8 | VIII.a.1 | | | | 0,098 | 104 | - 10 | 500 | 7,4 | 0,5 | 18 | 560 |
| | VIII.a.2 | 105 | 49 | - 20 | 0,25 | | 20 | 500 | 0,9 | 0,15 | 25 | 900 |
| | | | | | | | - 10 | 10 | 17 | 4,2 | 25 | 100 |

**Revendications**

1. Procédé de préparation de compositions bitume-polymère, dans lequel on réalise, à une température comprise entre 130 °C et 230 °C, un mélange de bitume avec un copolymère de styrène et d'un diène conjugué ayant une masse moléculaire viscosimétrique moyenne comprise entre 30 000 et 300 000, ledit copolymère étant utilisé en quantité allant de 0,5 % à 15 % en poids du bitume, et une source de soufre, et l'on maintient le mélange ainsi obtenu, sous agitation, dans ledit intervalle de température pendant une durée d'au moins quinze minutes, caractérisé en ce que, comme source de soufre, on emploie 0,005 à 15 % en poids, par rapport au bitume, d'un polysulfure ou d'un mélange de polysulfures répondant à la formule générale

$$R_1—(S)_m—(—R—(S)_m—)_x—R_2$$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent, saturé ou insaturé, en $C_1$ à $C_{20}$ formant un cycle avec les autres groupements d'atomes associés dans la formule, R est un radical hydrocarboné divalent, saturé ou insaturé, en $C_1$ à $C_{20}$, les $—(S)_m—$ représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2, et x représente un nombre entier prenant les valeurs de zéro à 10.

2. Procédé suivant la revendication 1, caractérisé en ce que le polysulfure est défini par la formule

$$R_1—(S)_n—R_2$$

dans laquelle $R_1$ et $R_2$ désignent chacun un radical hydrocarboné monovalent, saturé ou insaturé, en $C_1$ à $C_{20}$ ou sont reliés entre eux pour former un radical divalent hydrocarboné, saturé ou insaturé, en $C_1$ à $C_{20}$ analogue à R, $—(S)_n—$ représente un groupement divalent formé par un enchaînement de n atomes de soufre, n étant un nombre entier allant de 2 à 6.

3. Procédé suivant la revendication 1 ou 2, caractérisé en ce que les radicaux $R_1$ et $R_2$ de la formule du polysulfure sont identiques et choisis parmi les radicaux alcoyles en $C_1$ à $C_{20}$ et les radicaux cycloalcoyles et aryles en $C_6$ à $C_{20}$ ou sont reliés entre eux pour former un radical divalent alcoylène en $C_1$ à $C_{20}$ ou un radical cycloalcoylène ou arylène en $C_6$ à $C_{20}$, et que le radical divalent R est choisi parmi les radicaux alcoylènes en $C_1$ à $C_{20}$ ou les radicaux cycloalcoylènes ou arylènes en $C_6$ à $C_{20}$.

4. Procédé suivant la revendication 2 ou 3, caractérisé en ce que le polysulfure répond à la formule

$$R_3—(S)_p—R_3$$

dans laquelle $R_3$ désigne un radical alcoyle en $C_6$ à $C_{16}$ et $—(S)_p—$ représente un groupement divalent formé par un enchaînement de p atomes de soufre, p étant un nombre entier allant de 2 à 5.

5. Procédé suivant l'une des revendications 1 à 4, caractérisé en ce que la quantité de polysulfure utilisée représente 0,1 % à 5 % en poids du bitume.

6. Procédé suivant l'une des revendications 1 à 5, caractérisé en ce que le bitume a une pénétration comprise entre 5 et 500 et de préférence entre 20 et 400, ledit bitume étant plus particulièrement choisi parmi les bitumes de distillation directe et les bitumes soufflés ou semi-soufflés.

7. Procédé suivant l'une des revendications 1 à 6, caractérisé en ce que le copolymère est choisi parmi les copolymères statistiques ou séquencés de styrène avec un diène conjugué choisi parmi le butadiène, l'isoprène, le chloroprène, le butadiène carboxylé, et l'isoprène carboxylé.

8. Procédé suivant l'une des revendications 1 à 7, caractérisé en ce que le copolymère a une teneur pondérale en styrène allant de 15 % à 40 %.

9. Procédé suivant l'une des revendications 1 à 8, caractérisé en ce que le copolymère possède une masse moléculaire viscosimétrique moyenne comprise entre 70 000 et 200 000.

10. Procédé suivant l'une des revendications 1 à 9, caractérisé en ce que la quantité de copolymère ajoutée au bitume est comprise entre 0,7 % et 10 % en poids du bitume.

11. Procédé suivant l'une des revendications 1 à 10, caractérisé en ce que le copolymère et le polysulfure sont incorporés au bitume sous la forme d'une solution mère de ces deux produits dans un solvant consistant en une huile hydrocarbonée, qui présente un intervalle de distillation à pression atmosphérique compris entre 100 °C et 450 °C et situé plus particulièrement entre 150 °C et 370 °C.

12. Procédé suivant la revendication 11, caractérisé en ce que l'huile hydrocarbonée est choisie parmi les coupes pétrolières de caractère aromatique, les coupes pétrolières de caractère naphténo-paraffinique, les coupes pétrolières de caractère naphténo-aromatique, les huiles de houille, et les huiles d'origine végétale.

13. Procédé suivant l'une des revendications 11 et 12, caractérisé en ce que la solution mère est préparée par mise en contact des ingrédients la composant, sous agitation, à des températures comprises entre 20 et 170 °C, et de préférence entre 40 et 120 °C.

14. Procédé suivant l'une des revendications 11 à 13, caractérisé en ce que les quantités respectives

de copolymère et de polysulfure représentent 5 % à 40 % et 0,1 % à 15 % du poids de l'huile hydrocarbonée.

15. Procédé suivant la revendication 14, caractérisé en ce que la solution mère renferme 10 à 35 % de copolymère et 0,5 à 5 % de polysulfure, comptés en poids de l'huile hydrocarbonée.

16. Procédé suivant l'une des revendications 11 à 15, caractérisé en ce que l'on met en contact, à une température comprise entre 130 °C et 230 °C et sous agitation, de 80 à 95 % en poids de bitume avec 20 à 5 % en poids de la solution mère, cette dernière renfermant, en poids de l'huile hydrocarbonée servant de solvant, 10 à 35 % de copolymère de styrène et de diène conjugué et 0,5 à 5 % de polysulfure, puis on maintient le mélange ainsi obtenu sous agitation à une température comprise entre 130 °C et 230 °C, et de préférence à la température utilisée pour la mise en contact du bitume avec la solution mère, pendant une durée au moins égale à 15 minutes, et de préférence comprise entre 20 et 60 minutes.

17. Application des compositions bitume-polymère obtenues par le procédé suivant l'une des revendications 1 à 16, à la réalisation de revêtements, et en particulier de revêtements superficiels routiers.

18. Solution mère de polymère, utilisable notamment pour la préparation de compositions bitume-polymère, comprenant une huile hydrocarbonée, qui présente un intervalle de distillation à pression atmosphérique compris entre 100 °C et 450 °C, et, en solution dans cette huile, un copolymère de styrène et d'un diène conjugué et une source de soufre, les quantités respectives du copolymère et de la source de soufre dans la solution représentant 5 à 40 % et 0,1 à 15 % du poids de l'huile hydrocarbonée, caractérisée en ce que la source de soufre consiste en un polysulfure ou en un mélange de polysulfures répondant à la formule générale

$$R_1—(S)_m—(—R—(S)_m—)_x—R_2$$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent, saturé ou insaturé, en $C_1$ à $C_{20}$ formant un cycle avec les autres groupements d'atomes associés dans la formule, R est un radical hydrocarboné divalent, saturé ou insaturé, en $C_1$ à $C_{20}$, les — $(S)_m$ — représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2, et x représente un nombre entier prenant les valeurs de zéro à 10.

19. Solution mère suivant la revendication 18, caractérisé en ce que le polysulfure est défini par la formule

$$R_1—(S)_n—R_2$$

dans laquelle $R_1$ et $R_2$ désignent chacun un radical hydrocarboné monovalent, saturé ou insaturé, en $C_1$ à $C_{20}$ ou sont reliés entre eux pour former un radical divalent hydrocarboné, saturé ou insaturé, en $C_1$ à $C_{20}$ analogue à R, — $(S)_n$ — représente un groupement divalent formé par un enchaînement de n atomes de soufre, n étant un nombre entier allant de 2 à 6.

20. Solution mère suivant la revendication 18 ou 19, caractérisé en ce que les radicaux $R_1$ et $R_2$ de la formule du polysulfure sont identiques et choisis parmi les radicaux alcoyles en $C_1$ à $C_{20}$ et les radicaux cycloalcoyles et aryles en $C_6$ à $C_{20}$ ou sont reliés entre eux pour former un radical divalent alcoylène en $C_1$ à $C_{20}$ pour un radical cycloalcoylène ou arylène en $C_6$ à $C_{20}$, et que le radical divalent R est choisi parmi les radicaux alcoylènes en $C_1$ à $C_{20}$ ou les radicaux cycloalcoylènes ou arylènes en $C_6$ à $C_{20}$.

21. Solution mère suivant la revendication 19 ou 20, caractérisée en ce que le polysulfure répond à la formule

$$R_3—(S)_p—R_3$$

dans laquelle $R_3$ désigne un radical alcoyle en $C_6$ à $C_{16}$ et $—(S)_p—$ représente un groupement divalent formé par un enchaînement de p atomes de soufre, p étant un nombre entier allant de 2 à 5.

22. Solution mère suivant l'une des revendications 18 à 21, caractérisée en ce que le copolymère est choisi parmi les copolymères statistiques ou séquencés de styrène avec un diène conjugué choisi parmi le butadiène, l'isoprène, le chloroprène, le butadiène carboxylé, et l'isoprène carboxylé.

23. Solution mère suivant l'une des revendications 18 à 22 caractérisée en ce que le copolymère a une teneur pondérale en styrène allant de 15 % à 40 %.

24. Solution mère suivant l'une des revendications 18 à 23, caractérisée en ce que le copolymère possède une masse moléculaire viscosimétrique moyenne comprise entre 30 000 et 300 000, et de préférence située entre 70 000 et 200 000.

25. Solution mère suivant l'une des revendications 18 à 24, caractérisée en ce que l'huile hydrocarbonée présente un intervalle de distillation à pression atmosphérique situé entre 150 °C et 370 °C.

26. Solution mère suivant l'une des revendications 18 à 25, caractérisée en ce que l'huile hydrocarbonée est choisie parmi les coupes pétrolières de caractère aromatique, les coupes pétrolières

de caractère naphténo-paraffinique, les coupes pétrolières de caractère naphténo-aromatique, les huiles de houille, et les huiles d'origine végétale.

27. Solution mère suivant l'une des revendications 18 à 26, caractérisée en ce qu'elle renferme 10 à 35 % de copolymère et 0,5 à 5 % de polysulfure, comptés en poids de l'huile hydrocarbonée.

28. Solution mère suivant l'une des revendications 18 à 27, préparée par mise en contact des ingrédients qui la composent, sous agitation, à des températures comprises entre 20 et 170 °C et de préférence entre 40 et 120 °C.

**Claims**

1. A process for the preparation of bitumen-polymer compositions which comprises forming, at a temperature between 130 °C and 230 °C, a mixture of a bitumen, from 0.5 to 15 % by weight of the bitumen of a styrene-conjugated diene copolymer having an average viscosimetric molecular weight between 30 000 and 300 000 and a sulphur source, and maintaining the mixture thus obtained, within the said temperature range, for a period of at least 15 minutes, and which is characterized in that, as sulphur source, is used 0.005 to 15 % by weight of the bitumen of a polysulfide or a mixture of polysulfides having the general formula :

$$R_1{-}(S)_m{-}(R{-}(S)_m)_x{-}R_2$$

wherein $R_1$ and $R_2$ are each a $C_1$ to $C_{20}$ saturated or unsaturated monovalent hydrocarbon radical or are linked to form a $C_1$ to $C_{20}$ saturated or unsaturated divalent hydrocarbon radical forming a cycle with the other groups of atoms associated in the formula, R is a $C_1$ to $C_{20}$ saturated or unsaturated divalent hydrocarbon radical, the symbols $-(S)-_m$ represent divalent groups of m sulphur atoms wherein m can be different from one group to the other and designates an integer ranging from 1 to 6 with at least m in one group being equal to or above 2, and x represents an integer ranging from 0 to 10.

2. A process according to Claim 1, characterized in that the polysulfide is a compound of the formula

$$R_1{-}(S)_n{-}R_2$$

wherein $R_1$ and $R_2$ are each a $C_1$ to $C_{20}$ saturated or unsaturated divalent hydrocarbon radical similar to the R radical and the symbol $-(S)_n-$ represents a divalent group of n sulphur atoms wherein n is an integer ranging from 2 to 6.

3. A process according to Claim 1 or 2, characterized in that the $R_1$ and $R_2$ radicals of the polysulfide are identical and selected from $C_1$ to $C_{20}$ alkyl radicals and $C_6$ to $C_{20}$ cycloalkyl and aryl radicals or are linked together to form a divalent radical selected from $C_1$ to $C_{20}$ alkylene radicals and $C_6$ to $C_{20}$ cycloalkylene and arylene radicals, and the R divalent radical is selected from $C_1$ to $C_{20}$ alkylene radicals and $C_6$ to $C_{20}$ cycloalkylene and arylene radicals.

4. A process according to Claim 2 or 3, characterized in that the polysulfide is a compound of the formula

$$R_3{-}(S)_p{-}R_3$$

wherein $R_3$ is a $C_6$ to $C_{16}$ alkyl radical and $-(S)_p-$ represents a divalent group of p sulphur atoms wherein p is an integer ranging from 2 to 5.

5. A process according to any of Claims 1 to 4, characterized in that the polysulfide is used in a quantity ranging from 0.1 % to 5 % by weight of the bitumen.

6. A process according to any of Claims 1 to 5, characterized in that the bitumen has a penetration between 5 and 500 and preferably between 20 and 400, the said bitumen being more particularly selected from the group consisting of direct distillation bitumens and blown or semi-blown bitumens.

7. A process according to any of Claims 1 to 6, characterized in that the copolymer is selected from random copolymers or block copolymers of styrene with a conjugated diene, said diene being selected from the group consisting of butadiene, isoprene, chloroprene, carboxylated butadiene and carboxylated isoprene.

8. A process according to any of Claims 1 to 7, characterized in that the copolymer has a weight content in styrene ranging from 15 % to 40 %.

9. A process according to any of Claims 1 to 8, characterized in that the copolymer has an average viscosimetric molecular weight between 70 000 and 200 000.

10. A process according to any of Claims 1 to 9, characterized in that the quantity of copolymer added to the bitumen is between 0.7 % and 10 % by weight of the bitumen.

11. A process according to any of Claims 1 to 10, characterized in that the copolymer and polysulfide are incorporated into the bitumen in the form of a mother solution of these two products in a solvent consisting of a hydrocarbon oil having a distillation range at atmospheric pressure which is between 100 °C and 450 °C and more particularly between 150 °C and 370 °C.

12. A process according to Claim 11, characterized in that the hydrocarbon oil is selected from the group consisting of petroleum cuts having an aromatic character, petroleum cuts having a naphtheno-paraffinic character, petroleum cuts having a naphtheno-aromatic character, coal oils and oils of vegetable origin.

13. A process according to Claim 11 or 12, characterized in that the mother solution is prepared by contacting the ingredients entering into its composition, under stirring, at temperatures between 20 and 170 °C and preferably between 40 and 120 °C.

14. A process according to any of Claims 11 to 13, characterized in that the respective quantities of copolymer and polysulfide range from 5 % to 40 % and from 0.1 % to 15 % by weight of the hydrocarbon oil.

15. A process according to Claim 14, characterized in that the mother solution contains from 10 to 35 % copolymer and 0.5 % to 5 % polysulfide expressed by weight, of the hydrocarbon oil.

16. A process according to any of Claims 11 to 15, characterized in that it comprises contacting, at a temperature between 130 °C and 230 °C and under stirring, from 80 % to 95 % by weight of a bitumen with 20 % to 5 % by weight of the mother solution, the latter containing, expressed by weight of the hydrocarbon oil acting as a solvent, from 10 to 35 % of the copolymer of styrene and conjugated diene and 0.5 to 5 % of the polysulfide, and then maintaining the thus obtained mixture, under stirring, at a temperature between 130 °C and 230 °C, and preferably at a temperature corresponding to that prevailing during the step of contacting the bitumen with the mother solution, for a period at least equal to 15 minutes and preferably comprised between 20 and 60 minutes.

17. Application of the bitumen-polymer compositions obtained by making use of the process according to any of Claims 1 to 16, for producing coverings and especially superficial road coverings.

18. A polymer mother solution, suitable among others for the preparation of bitumen-polymer compositions, comprising a hydrocarbon oil having a distillation range, at atmospheric pressure, comprised between 100 °C and 450 °C and in solution in the oil, from 5 to 40 % by weight of the hydrocarbon oil of a copolymer of styrene with a conjugated diene and from 0.1 % to 15 % by weight of the hydrocarbon oil of a sulphur source, and characterized in that the sulphur source consists of a polysulfide or a mixture of polysulfides having the general formula

$$R_1—(S)_m—(R—(S)_m—)_x—R_2$$

wherein $R_1$ and $R_2$ are each a $C_1$ to $C_{20}$ saturated or unsaturated monovalent hydrocarbon radical or are linked to form a $C_1$ to $C_{20}$ saturated or unsaturated divalent hydrocarbon radical forming a cycle with the other groups of atoms associated in the formula, R is a $C_1$ to $C_{20}$ saturated or unsaturated divalent hydrocarbon radical, the symbols $—(S)_m—$ represent divalent groups of m sulphur atoms wherein m can be different from one group to the other and designates an integer ranging from 1 to 6 with at least m in one group being equal to or above 2, and x represents an integer ranging from 0 to 10.

19. A mother solution according to Claim 18, characterized in that the polysulfide is a compound of the formula

$$R_1—(S)_n—R_2$$

wherein $R_1$ and $R_2$ are each a $C_1$ to $C_{20}$ saturated or unsaturated monovalent hydrocarbon radical or are linked to form a $C_1$ to $C_{20}$ saturated or unsaturated divalent hydrocarbon radical similar to the R radical and the symbol $—(S)_n—$ represents a divalent group of n sulphur atoms wherein n is an integer ranging from 2 to 6.

20. A mother solution according to Claim 18 or 19, characterized in that the $R_1$ and $R_2$ radicals of the polysulfide are identical and selected from $C_1$ to $C_{20}$ alkyl radicals and $C_6$ to $C_{20}$ cycloalkyl and aryl radicals or are linked together to form a divalent radical selected from $C_1$ to $C_{20}$ alkylene radicals and $C_6$ to $C_{20}$ cycloalkylene and arylene radicals, and the R divalent radical is selected from $C_1$ to $C_{20}$ alkylene radicals and $C_6$ to $C_{20}$ cycloalkylene and arylene radicals.

21. A mother solution according to Claim 19 or 20, characterized in that the polysulfide has the formula

$$R_3—(S)_p—R_3$$

wherein $R_3$ is a $C_6$ to $C_{16}$ alkyl radical and $—(S)_p—$ represents a divalent group of p sulphur atoms wherein p is an integer ranging from 2 to 5.

22. A mother solution according to any of Claims 18 to 21, characterized in that the copolymer is selected from random copolymers or block copolymers of styrene with a conjugated diene selected from the group consisting of butadiene, isoprene, chloroprene, carboxylated butadiene and carboxylated isoprene.

23. A mother solution according to any of Claims 18 to 22, characterized in that the copolymer has a weight content in styrene ranging from 15 % to 40 %.

24. A mother solution according to any of Claims 18 to 23, characterized in that the copolymer has an

average viscosimetric molecular weight between 30 000 and 300 000 and preferably between 70 000 and 200 000.

25. A mother solution according to any of Claims 18 to 24, characterized in that the hydrocarbon oil has a distillation range, at atmospheric pressure, comprised between 150 °C and 370 °C.

26. A mother solution according to any of Claims 18 to 25, characterized in that the hydrocarbon oil is selected from the group consisting of petroleum cuts having an aromatic character, petroleum cuts having a naphtheno-paraffinic character, petroleum cuts having a naphtheno-aromatic character, coal oils and oils of vegetable origin.

27. A mother solution according to any of Claims 18 to 26, characterized in that it contains from 10 to 35 % copolymer and 0.5 to 5 % polysulfide expressed by weight of the hydrocarbon oil.

28. A mother solution according to any of Claims 18 to 27, characterized in that it is prepared by contacting the ingredients entering into its composition, under stirring, at temperatures comprised between 20 and 170 °C and preferably between 40 and 120 °C.

**Patentansprüche**

1. Verfahren zur Herstellung von Bitumen-Polymer-Zusammensetzungen, wobei man bei einer Temperatur zwischen 130 und 230 °C eine Mischung aus Bitumen mit einem Copolymer aus Styrol und einem konjugierten Dien mit einer durchschnittlichen viskosimetrischen Molekularmasse zwischen 30 000 und 300 000, wobei das Copolymer in einer Menge von 0,5 bis 15 Gew.-% des Bitumens verwendet wird, und einer Schwefelquelle herstellt und die so erhaltene Mischung unter Rühren im selben Temperaturbereich mindestens 15 Minuten lang hält, dadurch gekennzeichnet, daß man als Schwefelquelle 0,005 bis 15 Gew.-%, bezogen auf das Bitumen, eines Polysulfids oder einer Mischung aus Polysulfiden der allgemeinen Formel

$$R_1—(S)_m—(—R—(S)_m—)_x—R_2$$

verwendet, worin $R_1$ und $R_2$ jeweils ein gesättigter oder ein ungesättigter einwertiger Kohlenwasserstoffrest mit 1 bis 20 Kohlenstoffatomen sind oder miteinander zu einem gesättigten oder ungesättigten zweiwertigen Kohlenwasserstoffrest mit 1 bis 20 Kohlenstoffatomen verbunden sind und mit den anderen in der Formel anwesenden Atomgruppen einen Ring bilden, R ein gesättigter oder ungesättigter zweiwertiger Kohlenwasserstoffrest mit 1 bis 20 Kohlenstoffatomen ist, $—(S)_m—$ zweiwertige Gruppen darstellt, von denen jede aus m Schwefelatomen gebildet wird, wobei m von einer der Gruppen zur anderen verschieden sein kann und ganze Zahlen von 1 bis 6 darstellt, wobei mindestens eines der $m \geqslant 2$ ist, und x eine ganze Zahl von 0 bis 10 ist.

2. Verfahren nach Anspruch 1, dadurch gekennzeichnet, daß das Polysulfid durch die allgemeine Formel

$$R_1—(S)_n—R_2$$

definiert ist, worin $R_1$ und $R_2$ je ein gesättigter oder ungesättigter einwertiger Kohlenwasserstoffrest mit 1 bis 20 Kohlenstoffatomen sind oder miteinander zu einem gesättigten oder ungesättigten zweiwertigen Kohlenwasserstoffrest mit 1 bis 20 Kohlenstoffatomen analog zu R verbunden sind, $—(S)_n—$ eine zweiwertige Gruppe darstellt, die durch eine Verkettung von n Schwefelatomen gebildet wird, wobei n eine ganze Zahl von 2 bis 6 ist.

3. Verfahren nach Anspruch 1 oder 2, dadurch gekennzeichnet, daß die $R_1$- und $R_2$-Reste der Polysulfidformel identisch und ausgewählt sind aus der Gruppe der Alkylreste mit 1 bis 20 Kohlenstoffatomen und der Cycloalkyl- und Arylreste mit 6 bis 20 Kohlenstoffatomen oder miteinander zu einem zweiwertigen Alkylenrest mit 1 bis 20 Kohlenstoffatomen oder einem Cycloalkylen- oder Arylenrest mit 6 bis 20 Kohlenstoffatomen verbunden sind, und daß der zweiwertige Rest R ausgewählt ist aus der Gruppe der Alkylenreste mit 1 bis 20 Kohlenstoffatomen oder der Cycloalkylene oder Arylene mit 6 bis 20 Kohlenstoffatomen.

4. Verfahren nach Anspruch 2 oder 3, dadurch gekennzeichnet, daß das Polysulfid der allgemeinen Formel

$$R_3—(S)_p—R_3$$

entspricht, worin $R_3$ einen Alkylrest mit 6 bis 16 Kohlenstoffatomen bezeichnet und $—(S)_p—$ eine zweiwertige Gruppe darstellt, die durch eine Verkettung von p Schwefelatomen gebildet wird, wobei p eine ganze Zahl von 2 bis 5 darstellt.

5. Verfahren nach einem der Ansprüche 1 bis 4, dadurch gekennzeichnet, daß die verwendete Polysulfidmenge 0,1 bis 5 Gew.-% des Bitumens beträgt.

6. Verfahren nach einem der Ansprüche 1 bis 5, dadurch gekennzeichnet, daß das Bitumen eine Durchdringung zwischen 5 und 500, vorzugsweise zwischen 20 und 400 hat, wobei das Bitumen spezieller

ausgewählt ist aus den Bitumen aus direkter Destillation und den geblasenen oder halbgeblasenen Bitumen.

7. Verfahren nach einem der Ansprüche 1 bis 6, dadurch gekennzeichnet, daß das Copolymer ausgewählt ist aus den statistischen Copolymeren oder den Copolymeren mit einer Aufeinanderfolge von Styrol und einem konjugierten Dien, ausgewählt aus der Gruppe bestehend aus Butadien, Isopren, Chloropren, Carboxylbutadien und Carboxylisopren.

8. Verfahren nach einem der Ansprüche 1 bis 7, dadurch gekennzeichnet, daß das Copolymer einen Gewichtsanteil an Styrol von 15 bis 40 % hat.

9. Verfahren nach einem der Ansprüche 1 bis 8, dadurch gekennzeichnet, daß das Copolymer eine durchschnittliche viskosimetrische Molekularmasse zwischen 70 000 und 200 000 hat.

10. Verfahren nach einem der Ansprüche 1 bis 9, dadurch gekennzeichnet, daß die Menge des dem Bitumen zugesetzten Copolymers zwischen 0,7 und 10 Gew.-% des Bitumens beträgt.

11. Verfahren nach einem der Ansprüche 1 bis 10, dadurch gekennzeichnet, daß das Copolymer und das Polysulfid im Bitumen enthalten sind in Form einer Mutterlauge dieser beiden Produkte in einem Lösungsmittel bestehend aus einem Kohlenwasserstofföl, das bei Atmosphärendruck einen Destillationsbereich zwischen 100 und 450 °C und insbesondere zwischen 150 und 370 °C aufweist.

12. Verfahren nach Anspruch 11, dadurch gekennzeichnet, daß das Kohlenwasserstofföl ausgewählt ist aus den Erdölfraktionen mit aromatischem Charakter, den Erdölfraktionen mit Naphthen-Paraffin-Charakter, den Erdölfraktionen mit aromatischem Naphthen-Charakter, den Steinkohlenölen und den Ölen pflanzlichen Ursprungs.

13. Verfahren nach einem der Ansprüche 11 und 12, dadurch gekennzeichnet, daß die Mutterlauge hergestellt wird, indem man die Bestandteile, aus denen sie besteht unter Rühren in Kontakt bringt bei Temperaturen zwischen 20 und 170 °C, vorzugsweise zwischen 40 und 120 °C.

14. Verfahren nach einem der Ansprüche 11 bis 13, dadurch gekennzeichnet, daß die Copolymer- bzw. Polysulfidmengen 5 bis 40 Gew.-% bzw. 0,1 bis 15 Gew.-% des Kohlenwasserstofföls betragen.

15. Verfahren nach Anspruch 14, dadurch gekennzeichnet, daß die Muterlauge 10 bis 35 % Copolymer und 0,5 bis 5 % Polysulfid, gemessen am Gewicht des Kohlenwasserstofföls, enthält.

16. Verfahren nach einem der Ansprüche 11 bis 15, dadurch gekennzeichnet, daß man bei einer Temperatur zwischen 130 und 230 °C und unter Rühren 80 bis 95 Gew.-% Bitumen mit 20 bis 5 % der Mutterlauge in Kontakt bringt, wobei die Mutterlauge, bezogen auf das Gewicht des als Lösungsmittel dienenden Kohlenwasserstofföls, 10 bis 35 % Copolymer aus Styrol und konjugiertem Dien und 0,5 bis 5 % Polysulfid enthält, dann die so erhaltene Mischung unter Rühren bei einer Temperatur zwischen 130 und 230 °C, vorzugsweise bei der Temperatur, bei der das Bitumen mit der Mutterlösung in Kontakt gebracht wurde, wenigstens 15 Minuten lang, vorzugsweise zwischen 20 und 60 Minuten lang hält.

17. Verwendung von Bitumen-Polymer-Gemischen, die durch das Verfahren nach einem der Ansprüche 1 bis 16 erhalten wurden, zur Herstellung von Überzügen, besonders von Straßendecken.

18. Polymermutterlauge, die vor allem für die Herstellung von Bitumen-Polymergemischen verwendet werden kann, enthaltend ein Kohlenwasserstofföl, das bei Atmosphärendruck einen Destillationsintervall zwischen 100 und 450 °C hat, und, gelöst in diesem Öl, ein Copolymer von Styrol und einem konjugiertem Dien und eine Schwefelquelle, wobei die Copolymer- bzw. Schwefelquellenmenge in der Lösung 5 bis 40 % bzw. 0,1 bis 15 % beträgt, dadurch gekennzeichnet, daß die Schwefelquelle aus einem Polysulfid oder einer Mischung aus Polysulfiden der allgemeinen Formel

$$R_1—(S)_m—(—R—(S)_m—)_x—R_2$$

besteht, worin $R_1$ und $R_2$ je ein gesättigter oder ungesättigter einwertiger Kohlenwasserstoffrest mit 1 bis 20 Kohlenstoffatomen sind oder verbunden sind zu einem gesättigten oder ungesättigten zweiwertigen Kohlenwasserstoffrest mit 1 bis 20 Kohlenstoffatomen, der mit den anderen in der Formel anwesenden Atomgruppen einen Ring bildet, R ein gesättigter oder ungesättigter zweiwertiger Kohlenwasserstoffrest mit 1 bis 20 Kohlenstoffatomen ist, — $(S)_m$ — zweiwertige, aus je einem Schwefelatom gebildete Gruppen darstellt, m von Gruppe zu Gruppe verschieden sein kann und ganze Zahlen von 1 bis 6 darstellt, wobei mindestens 1 $m \geqslant 2$ ist, und x eine ganze Zahl von 0 bis 10 ist.

19. Mutterlauge nach Anspruch 18, dadurch gekennzeichnet, daß das Polysulfid durch die Formel

$$R_1—(S)_n—R_2$$

definiert ist, worin $R_1$ und $R_2$ je ein gesättigter oder ungesättigter einwertiger Kohlenwasserstoffrest mit 1 bis 20 Kohlenstoffatomen sind oder verbunden sind zu einem gesättigten oder ungesättigten zweiwertigen Kohlenwasserstoffrest mit 1 bis 20 Kohlenstoffatomen analog zu R, — $(S)_n$ — eine zweiwertige Gruppe, gebildet aus einer Verkettung von n Schwefelatomen, wobei n eine ganze Zahl von 0 bis 6 ist, darstellt.

20. Mutterlauge nach einem der Ansprüche 18 oder 19, dadurch gekennzeichnet, daß die Reste $R_1$ und $R_2$ der Polysulfid-Formel identisch und ausgewählt sind aus den Alkylresten mit 1 bis 20 Kohlenstoffatomen und den Cycloalkyl- und Arylresten mit 6 bis 20 Kohlenstoffatomen oder miteinander zu einem zweiwertigen Alkylen -Rest mit 1 bis 20 Kohlenstoffatomen für einen Cycloalkylen oder

Arylenrest mit 6 bis 20 Kohlenstoffatomen verbunden sind, und daß der zweiwertige Rest R ausgewählt ist aus den Alcoylenresten mit 1 bis 20 Kohlenstoffatomen oder den Cycloalkylen- oder Arylenresten mit 6 bis 20 Kohlenstoffatomen.

21. Mutterlauge nach Anspruch 19 oder 20, dadurch gekennzeichnet, daß das Polysulfid der allgemeinen Formel

$$R_3—(S)_p—R_3$$

entspricht, worin $R_3$ ein Alkylrest mit 6 bis 16 Kohlenstoffatomen ist und $—(S)_p—$ eine zweiwertige Gruppe darstellt, die durch eine Verkettung von p Schwefelatomen gebildet wird, wobei P eine ganze Zahl von 2 bis 5 ist.

22. Mutterlauge nach einem der Ansprüche 18 bis 21, dadurch gekennzeichnet, daß das Copolymer ausgewählt ist aus den statistischen Copolymeren oder den Copolymeren, gefolgt von Styrol mit einem konjugierten Dien, ausgewählt aus Butadien, Isopren, Chloropren, Carboxylbutadien und Carboxylisopren.

23. Mutterlauge nach einem der Ansprüche 18 bis 22, dadurch gekennzeichnet, daß das Copolymer einen Gewichtsanteil an Styrol von 15 bis 40 % hat.

24. Mutterlauge nach einem der Ansprüche 18 bis 23, dadurch gekennzeichnet, daß das Copolymer eine durchschnittliche viskosimetrische Molekularmasse zwischen 30 000 und 300 000, vorzugsweise zwischen 70 000 und 200 000 hat.

25. Mutterlauge nach einem der Ansprüche 18 bis 24, dadurch gekennzeichnet, daß das Kohlenwasserstofföl bei Atmosphärendruck einen Destillationsintervall zwischen 150 und 370 °C hat.

26. Mutterlauge nach einem der Ansprüche 18 bis 25, dadurch gekennzeichnet, daß das Kohlenwasserstofföl ausgewählt ist aus den Erdölfraktionen mit aromatischem Charakter, den Erdölfraktionen mit aromatischem Naphthen-Charakter, Steikohlenöl und den Ölen pflanzlichen Ursprungs.

27. Mutterlauge nach einem der Ansprüche 18 bis 26, dadurch gekennzeichnet, daß sie 10 bis 35 % Copolymer und 0,5 bis 5 % Polysulfid, gemessen am Gewicht des Kohlenwasserstofföls, enthält.

28. Mutterlauge nach einem der Ansprüche 18 bis 27, dadurch hergestellt, daß man die Bestandteile, aus denen sie besteht, unter Rühren bei Temperaturen zwischen 20 bis 170 °C, vorzugsweise zwischen 40 und 120 °C in Kontakt bringt.